# EUROPEAN PATENT SPECIFICATION

(11) **EP 2 159 256 B1**
(45) Date of publication and mention of the grant of the patent: **07.03.2012**
(21) Application number: 09168350.8
(22) Date of filing: 21.08.2009
(51) Int. Cl.: C08K 5/00, C08L 27/06, C08L 67/08

(54) **Plasticized thermoplastic polymer composition and production of plasticized articles thereof**
Weichmacher enthaltende thermoplastische Polymerzusammensetzung und Herstellung von Weichmacher enthaltenden Artikeln daraus
Composition de polymère thermoplastique plastifié et production des articles plastifiés à partir de cette composition

(30) Priority: 25.08.2008 IT MI20081532
(43) Date of publication of application: 03.03.2010
(73) Proprietor: Pigliafreddo, Marco, 20087 Robecco Sul Naviglio (IT)
(72) Inventor: Pigliafreddo, Marco, 20087 Robecco Sul Naviglio (IT)
(74) Representative: Palladino, Saverio Massimo

(56) References cited:
- EP-A- 1 057 857
- WO-A-03/089490
- US-A- 3 250 738
- US-A- 3 376 242
- US-A- 3 723 369

## Description

The present invention concerns a plasticized composition based on thermoplastic polymers, and the use thereof for the production of plasticized articles characterised by a high resistance to extraction in oils, solvents, soaps etc.

Plasticized compositions are obtained by adding to polymeric materials, mainly but not exclusively thermoplastic resins, plasticizing compounds (generally esters), which improve the processability of the composition and/or give the finished article obtained from the latter characteristics of flexibility and softness. The obtainment of these characteristics is due to the fact that, subjecting mixtures of a thermoplastic resin and a plasticizer to heating at temperatures above 140 °C, an irreversible process called gelation takes place, in which the plasticizer molecules are permanently inserted between the polymer chains, spacing them. This results in the breakage of some bonds between polymer chains, leading to greater mobility thereof and therefore reduced, or even complete absence, of rigidity. In addition to this main characteristic, some plasticizers can give the finished article in which they are inserted other secondary but nevertheless useful properties: these can include elasticity, greater resistance to low temperatures, to atmospheric agents and to combustion.

Although these compositions can be produced with almost all thermoplastic polymers, generally vinylic or acrylic polymers are used. In particular, by far the most widely known application is the plasticization of polyvinyl chloride (PVC). The compositions obtained are defined according to their physical form: dry-blend (mixtures in the form of powder), granules and plastisols (low, medium or high viscosity pastes).

There are various classes of plasticizers, each with specific functions and properties. A first rough division can be made between monomeric plasticizers (esters with low molecular weight) and polymeric plasticizers (esters with higher molecular weight consisting of repeated units).

The monomeric plasticizers most widely used are the phthalates, thanks to their inexpensiveness and good gelation properties. To give the final material particular properties other compounds are used, for example adipates or sebacates (to obtain a mixture with good flexibility also at particularly low temperatures), citrates, in particular acetyltributylcitrate (used in medical devices, in toys and in objects designed for contact with food due to their low toxicity), benzoates (used if the production process requires faster gelation especially at low temperatures, for example below 160 °C), phosphates (which in addition to permitting rapid gelation, give the finished article fire-resistant properties) and trimellitates (used when superior resistance to high temperatures is required thanks to their low volatility).

All the monomeric plasticizers are, however, characterised by a low resistance to extraction with solvents. This characteristic means that, in normal operating conditions, these plasticizers are easily released by contact of the finished articles which contain them with agents such as solvents, oils or soaps; or, they can be relatively easily transferred by contact to other polymeric materials. In most industrial applications the plasticizer is instead required to have a high resistance to extraction; the most widespread of these applications concern the field of pipes containing petrol and solvents, industrial gloves, coating of electrical cables, insulating tapes, films for food packaging and seals of capsules for food containers, for example in metal caps for glass jars.

To obtain better characteristics of extraction with solvents, polymeric plasticizers are used; the greater resistance to extraction of these compounds is due to their larger molecular dimensions, with consequent reduced mobility inside the structure of the final material.

Polymeric plasticizers generally consist of polyesters with variable molecular weight and are prepared from bicarboxylic acids and glycols and are possibly terminated with monofunctional acids and/or alcohols. By appropriately choosing the initial components or modifying the ratios thereof, it is possible to obtain numerous formulations of polymeric plasticizers with different characteristics according to requirements. There is a wide-ranging patent literature on the subject. The following patents can be cited by way of example only: US 2,647,099, which describes the preparation of polymeric plasticizers based on adipic acid terminated with monofunctional alcohols; US 2,815,354, which describes polyesters terminated with fatty acids that can be used to plasticize cellulose acetate; US 3,376,242 which describes plasticizers for vinylic resins based on polyesters obtained from adipic acid/isophthalic acid mixtures and terminated with saturated fatty acids, or with mixtures of saturated and unsaturated fatty acids in which the unsaturated fatty acids are present in no more than 10% by moles of said mixtures of acids; US 4,463,128, which describes complex polymeric plasticizers for the plasticization of polyvinylacetalic polymers; and US 4,698,383 which describes plasticizers based on polyesters obtained from 1,4-butanediol.

Polymeric plasticizers have however a relatively high viscosity; irrespective of the specific composition, the viscosity of a polymeric plasticizer is at least one order of magnitude greater than that of the monomeric plasticizers. This entails a greater viscosity also of the thermoplastic resin/plasticizer mixture, with negative consequences on its workability. Furthermore, in order to lower the extraction values to improve the characteristics of the finished products, the molecular weight of the polyester constituting the plasticizer has to be increased, resulting in even greater viscosity.

To remedy the problem, it is possible to increase the quantity of plasticizer up to a certain limit; in this case, however, problems of excessive plasticization can occur (article too soft or even without adequate consistency) or reduction in resistance to extraction due to exudation of the plasticizer. Alternatively it is possible to add viscosity depressants or other lubricants to the formulation; however, also these compounds can be easily extracted from the final article, due to their low molecular weight.

Almost all the polymeric plasticizers currently on the market have a viscosity equal to or higher than 2000 mPa·s at 35 °C and therefore suffer from the above-mentioned defects. The few that have lower viscosities do not have adequate resistance to extraction.

Object of the present invention is to provide a thermoplastic polymer-based plasticized composition, and the use thereof for the production of plasticized articles which are able to overcome the drawbacks of the systems of the prior art.

In particular, the object of the invention is to provide a thermoplastic polymer-based plasticized composition with reduced viscosity values, which at the same time allows the production of finished articles characterised by low extraction values shortly after production.

These objects are achieved by the present invention that in a first aspect concerns a thermoplastic polymer-based plasticized composition comprising:
- one or more vinylic or acrylic thermoplastic polymers, P;
- a polyester, A, obtained by reacting:
   - a reagent A1consisting of one or more components chosen from dicarboxylic acids, corresponding anhydrides, hydroxyacids and corresponding lactones;
   - a reagent A2 consisting of one or more polyvalent alcohols, or a mixture of one or more polyvalent alcohols and one or more monovalent alcohols; and
   - a reagent A3 consisting of one or more unsaturated fatty acids or a mixture of one or more unsaturated fatty acids and one or more other monocarboxylic acids
   in which the reagents A1, A2 and A3 are reacted in stoichiometric ratios such that the total moles of the unsaturated fatty acids are no less than the difference between the total moles of the reagent A2 and the total moles of the dicarboxylic acids and corresponding anhydrides of the reagent A1;
- a radical generator, B.

For the sake of simplicity, in the rest of the text "bicarboxylic acids" refers to these acids, their anhydrides and mixtures of these compounds; and "hydroxyacids" refer to the hydroxyacids, their lactones and mixtures of these compounds.

The weight ratios between the components of the composition of the invention can vary within broad limits; preferably, in a composition of the invention, 5 to 200 parts in weight of polyester A per 100 parts in weight of polymer (or mixture of polymers) P are used; and 0.01 to 5 parts in weight of radical generator B per 100 parts in weight of polyester A are used.

The plasticized composition can contain, in addition to the already cited components, also other additives known in the field, among which in particular stabilisers for PVC when the latter is chosen as thermoplastic polymer (PVC has the tendency to degrading during hot processing, generating HCI; the stabilisers are added to inhibit the phenomenon), pigments, inert fillers, etc.

The inventor has found that by operating with a mixture as defined above, low migration values can be obtained even starting from mixtures with viscosity values low enough to be used in a simple manner in all the applications previously indicated; this is because the polyester A can be cross-linked at the time of mixing with the thermoplastic resin, or even better after gelation, increasing its molecular weight and thus reducing its mobility inside the final plasticized article, which thus has a high resistance to extraction with solvents.

The condition that the generation of radicals, which starts cross-linking of the polyester A, does not begin before gelation of the mixture, can be met in various ways, according to the particular type of radical generator B used, as described below.

The thermoplastic polymer useful for the purposes of the invention is a vinylic or acrylic polymer, and preferably is PVC.

The polyester A can be obtained with the usual polyester synthesis techniques, using as reagents A1, A2 and A3 as defined above, in stoichiometric ratios such that the total moles of the unsaturated fatty acids are no less than the difference between the total moles of the reagent A2 and the total moles of the dicarboxylic acids of the reagent A1.

To better regulate the degree of final cross-linking of the product obtained by cross-linking of the polyester A, the unsaturated fatty acid (or the mixture of unsaturated fatty acids) of reagent A3 can be partially substituted with monocarboxylic acids. For the same purpose, it is possible to partially substitute the polyvalent alcohols of reagent A2 with monovalent alcohols. These partial substitutions are possible as long as the condition defined above concerning the relation between total moles of unsaturated fatty acids, dicarboxylic acids (or their anhydrides) and reagent A2 is maintained.

The polyester A can be produced with a single-stage or two-stage process.

In the first case the raw materials are loaded in the reactor all together in the necessary stoichiometric ratios and reacted until the required acidity value is reached, usually below 5 mgKOH/g and preferably below 1 mgKOH/g; control of the acidity number and therefore the state of progress of the reaction is performed by sampling at regular intervals small quantities of the reaction mixture and titrating with KOH. In some cases the stoichiometric excess of an alcohol (generally the lowest-boiling of the reagents) can be increased, so as to increase the reaction speed; said alcohol in excess will then be removed by distillation. The esterification temperatures are generally comprised between 160 and 230 °C. The reaction can be advantageously performed at reduced pressure, for example through the use of a vacuum pump, so as to facilitate distillation of the reaction water and of the alcohol in excess. To facilitate the esterification reaction it may be useful, but not necessary, to use titanium, tin or zinc-based catalysts, well known in the sector.

In the second case in a first stage the esterification in an inert atmosphere between the reagents A1 and A2 is performed in a stoichiometric ratio between the equivalents of the bicarboxylic acids and those of the reagent A2 below 1, until forming a -OH terminated prepolymer. This reaction is continued until the desired acidity number is reached, usually below 5 mgKOH/g.

Once the -OH terminated prepolymer has been obtained with the desired molecular weight, the reagent A3 is added, and the reaction mixture is reacted in the same conditions as the first stage until the set acidity value is reached.

Some of the main dicarboxylic acids that can be used to produce the polyester A are, for example, succinic, glutaric, adipic, pimelic, suberic, azelaic, sebacic, dodecandioic, isophthalic, terephthalic, and phthalic acids, phthalic anhydride or mixtures of two or more of said acids or anhydride. Among the hydroxyacids that can be added to the dicarboxylic acid, or substitute the latter, the main ones are lactic acid, glycolic acid and ε-caprolactone.

Some of the main polyvalent alcohols are, for example, ethylene glycol, diethylene glycol, triethylene glycol, polyethylene glycol, 1,2-propanediol, dipropylene glycol, polypropylene glycol, 1,3-propanediol, 2-methyl-2-ethyl-1,3-propanediol, 2-methyl-1,3-propanediol, 1,2-butanediol, 1,3-butanediol, 1,4-butanediol, neopentyl glycol, 1,4-pentanediol, 1,6-hexanediol, glycerin, trimethylolpropane or pentaerythrite or their mixtures.

Lastly, a non-exhaustive list of unsaturated fatty acids that can be used comprises palmitoleic, oleic, elaidic, vaccenic, linoleic, linolenic, stearidonic, gadoleic, arachidonic, timnodonic, erucic, cetoleic, clupanodonic, nervonic and cervonic acids or their mixtures. The unsaturations of said acids can be either conjugated or non-conjugated.

The polyester A obtained is stable for months if kept closed, preferably in the absence of oxygen.

To start cross-linking of the polyester A (and therefore the increase of its molecular weight), is necessary the use of a radical generator, B, that must be added to the other components of the plasticized composition prior to gelation of the same, preferably in the shortest possible time before said gelation.

Compositions containing a polyester (in addition to any other components) cross-linked by the addition of a radical generator are known from various patent documents. For example, patent application EP 1057857 A2 describes alkydic resins containing unsaturated fatty acids as chain terminators, cross-linked by addition of a mixture of cobalt and manganese salts and an amino alcohol as a reaction initiator; patent application WO 03/089490 A2 describes polyester-based thermoplastic resins produced by reactive extrusion of the polyester with an organic peroxide. In these documents, however, the polyester is the main component of the composition, and can be the only polymer present in it; vice versa, in the compositions of the present invention, the polyester is added only as a secondary component, for plasticization of the thermoplastic polymer P.

Various compounds able to generate radicals are known in literature, including for example diazo compounds, organic peroxides, photoinitiators in combination with UV radiation and metal salts of organic acids; patent US 4,463,128 gives a long list of said compounds.

The most important diazo compounds are azodicarbonamide (ADC), azobisisobutyronitrile (AIBN) and1,1-azobiscyclohexanecarbonitrile (ABCN).

A non-exhaustive list of organic peroxides comprises: methyl ethyl ketone peroxide, methyl isobutyl ketone peroxide, acetylacetone peroxide, cyclohexanone peroxide, cumene hydroperoxide, tert-butyl hydroperoxide and dibenzoyl peroxide.

In these first two classes the generation of radicals occurs by heating; the peroxides require temperatures of at least 50 °C, while for the diazo compounds at least 100 °C are necessary (approximate values). Since the beginning of the cross-linking of the polyester can be easily controlled by the operator, the radical generator B can be mixed with the polyester A at any time.

Various classes of photoinitiators are known, the most widely used of which are: benzoin and its ethers; benzyl and its ketals; acetophenone, benzophenone, alkylphenones and their derivatives; alpha hydroxyketones; acylphosphine oxides; thioxanthones; and titanocenes.

All photoinitiators do not give rise to cross-linking of the polyester A until they are irradiated with a radiation of suitable wavelength (in the UV range); consequently, also in this case beginning of the cross-linking of the polyester can be easily controlled by the operator and therefore the radical generator B can be mixed with the polyester A at any time.

The metal salts of organic acids (commonly carboxylic acids) which are able to generate radicals are well known in the field of alkylic resins under the definition siccatives. Siccatives are classified in various categories according to their catalytic action.

Primary siccatives are those that actually catalyse formation of the peroxides by reaction with oxygen present in the air. By decomposition of said peroxides free radicals are generated which initiate cross-linking of the plasticizer. The metals that constitute the primary siccatives are mainly cobalt and manganese, but also cerium, iron and vanadium.

In addition to primary siccatives it may be useful, although not necessary, to use also the so-called secondary siccatives and auxiliary siccatives. The former serve for example to prevent the cross-linking occurring only superficially. Although they do not have their own catalytic activity, they permit in-depth cross-linking. The metals used for this purpose are zirconium, barium, aluminium, bismuth, strontium and lead. Auxiliary siccatives have the function of giving the entire system greater stability, preventing loss of the catalytic power of the primary siccatives. The metals used for formation of the auxiliary siccatives are mainly calcium, zinc and lithium.

In the case of cross-linking by means of metal salts of organic acids, it is preferable for them to be brought into contact with the polyester A at the shortest possible distance in time from the gelation process; this is because in this case the generation of radicals occurs simply by contact with the oxygen in the air, hence (unless operating in an inert atmosphere which, however, is extremely disadvantageous in industrial terms), cross-linking of the polyester A begins as soon as one of the metal salts of organic acids previously described is added to it, resulting in a possible increase in viscosity of the plasticized composition.

Choice of the particular type of radical generator depends on various factors, for example the required cross-linking speed (the fastest are the photoinitiators), availability or not of a UV-visible lamp, or any laws to be observed (food compliance, pharmacopoeia, etc.) which can lead to the exclusion of some radical generators.

The invention will be further illustrated by the following examples.

### EXAMPLE 1

This example refers to the preparation of a polyester terminated with unsaturated fatty acids for use as a plasticizer according to the invention.

843 g of 1,2-propanediol (11.1 moles) and 1,457 g of adipic acid (10.0 moles) are placed in a reactor provided with stirrer and distillation column, under a slight nitrogen flow. The temperature is brought to 200 °C in a one hour, removing the reaction water. The reaction is left to proceed at this temperature for approximately 6 hours, until the reacting mixture reaches an acidity value below 5 mgKOH/g. 484 g of olein (1.7 moles) and 0.046 g of butyl titanate as esterification catalyst are then added to the reactor; olein is a commercial mixture of fatty acids containing mainly oleic acid (approx. 80% by weight) and linoleic acid (approx. 10%). The temperature is brought to 230 °C in approximately half an hour and a slight vacuum is applied to facilitate removal of all the reaction water. The reaction is continued until reaching an acidity value below 1 mgKOH/g, which takes approximately 2 hours. The reaction product is then cooled, filtered and analysed, said analysis identifying that the final product has a hydroxyl number of 11.5 and a viscosity at 35 °C equal to 1,870 mPa·s.

### EXAMPLE 2 (COMPARATIVE)

This example refers to the preparation of a polyester which can be used as a plasticizer of thermoplastic polymers, but not terminated with unsaturated fatty acids as required by the present invention.

The procedure of example 1 is repeated, using however 346 g of lauric acid (saturated fatty acid) instead of olein in the second reaction phase.

The characteristics of the final product are: acidity below 1; hydroxyl number 18.0; viscosity at 35 °C equal to 1,670 mPa·s.

### EXAM PLE 3

This example refers to the preparation of a PVC plastisol using as plasticizer the polyester produced in example 1; a plastisol was chosen because this form is the most critical one as regards the characteristics of extraction with solvents, given the high percentage of plasticizer present.

The following are placed in a vessel:
- 100 parts by weight of Pevikon P15 (a homopolymer PVC in emulsion at K70 produced by Ineos);
- 1 part by weight of Reagens AP59 (Ca/Zn-based stabiliser for PVC produced by Reagens);
- 200 parts by weight of the plasticizer produced in example 1;
- 6 parts by weight of Additol VXW6206, a siccative produced by Cytec containing carboxylate salts of cobalt (5%), lithium (0.22%) and zirconium (7.5%).

The mixture is mixed for about 1 hour, obtaining a plastisol the viscosity of which, measured at 25 °C with a Brookfield viscosity meter (one day after preparation), is equal to 14,500 mPa·s.

With the plastisol thus obtained is produced a strip, 1 mm thick and measuring 15x10 cm², spreading the plastisol by means of a film spreader on a sheet of tinplate as a temporary support. After baking at 200 °C for 60 seconds in air to gel the material, the strip is detached from the support and cut into three equal parts. The three samples thus obtained then undergo extraction tests immersing them in iso-octane at 30 °C for two days; the samples are immersed in iso-octane immediately after preparation (indicated below as sample T₀), after 14 days (T₁₄) and after 28 days (T₂₈), respectively. After the two days of immersion in iso-octane, each sample is extracted from the solvent and dried in a ventilated oven (in air) at 60 °C for 12 hours.

The extraction value is obtained by measuring the weight loss of the strips after the treatment in iso-octane. The test results are reported in table 1.

### EXAMPLE 4

The test of example 3 is repeated, using instead of the 6 parts by weight of the siccative Additol VXW6206, 12 parts by weight of a siccative produced by mixing and grinding by hand in a mortar 3 parts by weight of cobalt stearate, 1 part by weight of titanium dioxide and 8 parts by weight of acetyltributylcitrate (ATBC); this siccative, containing 25% by weight of cobalt stearate, will be indicated below by the abbreviation CoSt25. The test results are reported in table 1.

### EXAMPLES 5-9 (COMPARATIVE)

These examples refer to the preparation of PVC plastisols not in the conditions of the invention.

In particular:
- in example 5 the procedure of example 3 is repeated, but without using the siccative;
- in example 6 the procedure of example 5 is repeated, but using the polyester produced in example 2 as plasticizer;
- in example 7 the procedure of example 6 is repeated, but adding 6 parts by weight of the siccative Additol VXW6206;
- in example 8 the procedure of example 5 is repeated, but using Santicizer 417, a commercial plasticizer produced by Ferro Chemicals, instead of the plasticizer of example 1; and
- in example 9 the procedure of example 4 is repeated, but using as plasticizer the polyester produced in example 2.

The test results relative to the samples prepared according to the invention (examples 3 and 4) and in the conditions not of the invention (examples 5-9) are summarised in table 1, which reports the formulation of each of the plastisols (PE1 indicates the polyester produced as in example 1, hence according to the invention, while PE2 indicates the polyester of example 2, not according to the invention), the viscosity of the plastisol measured one day after preparation, and the extraction values with solvent measured on the sample just prepared (To), 14 days after preparation (T₁₄) and 28 days after preparation (T₂₈); the extraction values are reported as mg of weight reduction, standardised per dm² of surface of the sample.

**Table 1**

| Ex. | Plastisol formulation (parts by weight) | | | | | | | Viscosity (mPa·s) | Extraction (mg/dm²) | | |
|---|---|---|---|---|---|---|---|---|---|---|---|
| | Pevikon 15 | Reagens AP59 | PE1 | PE2 | Santicizer 417 | Siccative VXW6206 | Siccative CoSt25 | | T₀ | T₁₄ | T₂₈ |
| 3 | 100 | 1 | 200 | / | / | 6 | / | 14,000 | 410 | 190 | 180 |
| 4 | 100 | 1 | 200 | / | / | / | 12 | 13,000 | 490 | 400 | 300 |
| 5 | 100 | 1 | 200 | / | / | / | / | 14,500 | 370 | 360 | 365 |
| 6 | 100 | 1 | / | 200 | / | / | / | 12,600 | 310 | 310 | 305 |
| 7 | 100 | 1 | / | 200 | / | 6 | / | 12,000 | 390 | 320 | 325 |
| 8 | 100 | 1 | / | / | 200 | / | / | 13,700 | 270 | 280 | 275 |
| 9 | 100 | 1 | / | 200 | / | / | 12 | 11,500 | 410 | 420 | 440 |

### EXAMPLE 10

This example refers to the preparation in one single stage of a polyester terminated with unsaturated fatty acids for use as a plasticizer according to the invention with viscosity below analogous products currently on the market.

798 g of 1,2-propanediol (10.5 moles), 1,226 g of adipic acid (8.4 moles) and 889 g of olein (3.2 moles) are loaded in a reactor provided with stirrer and distillation column, under a slight nitrogen flow. The temperature is brought to 200 °C in about one hour, removing the reaction water. The reaction is left to continue at this temperature for approximately 3 hours until the reagent mixture reaches an acidity value below 50 mgKOH/g. 0.42 g of butyltitanate are then added in the reactor as esterification catalyst. The temperature is brought to 230 °C in about half an hour and a slight vacuum is applied to facilitate the removal of all the reaction water. The reaction is continued until reaching an acidity value below 5 mgKOH/g, which takes approximately 5 hours. The reaction product is then cooled, filtered and analysed, said analysis identifying that the final product has a hydroxyl number equal to 20.5 and a viscosity at 25 °C equal to 645 mPa·s.

### EXAMPLE 11

The test of example 3 is repeated, but using:
- 100 parts by weight of Pevikon P15;
- 1 part by weight of Reagens AP59;
- 100 parts by weight of the plasticizer produced in example 10;
- 3 parts by weight of Additol VXW6206.

The test result is reported in table 2.

### EXAMPLE 12

The test of example 11 is repeated using, instead of 3 parts by weight of the siccative Additol VXW6206, 1.6 parts by weight of a 50:50 mixture of azodicarbonamide and zinc oxide. This radical generator will be indicated below by the abbreviation ADC. The test result is reported in table 2.

### EXAMPLE 13

The test of example 11 is repeated using 5 parts by weight of Esacure^{®} KTO 46 (a photo-initiator produced by the company Lamberti S.p.A. of Gallarate, containing a mixture of acylphosphine oxides, alpha hydroxyketones and derivatives of benzophenone, indicated below by the abbreviation KT046) instead of 3 parts by weight of the siccative Additol VXW6206. After baking, the strips undergo UV radiation with energy equal to 3000 mJ/cm². The test result is reported in table 2.

### EXAMPLES 14-16 (COMPARATIVE)

These examples refer to the preparation of PVC plastisols not in the conditions of the invention. In particular:
- in example 14 the procedure of example 11 is repeated, without use of the siccative;
- in example 15 the procedure of example 11 is repeated, without use of the siccative and using in place of the plasticizer of example 10 the product Santicizer 416 (a commercial plasticizer produced by Ferro Chemicals) having viscosity at 25 °C of approximately 2,000 mPa·s;
- in example 16 the procedure of example 15 is repeated, using a quantity of plasticizer such as to obtain the same viscosity as the plastisol prepared according to the procedure of example 11.

The results of the tests relative to the samples prepared according to the invention (examples 11-13) and in conditions not of the invention (examples 14-16) are summarised in table 2, which reports the formulation of each of the plastisols (PE10 indicates the polyester produced as in example 10, hence according to the invention) and in which the meaning of the symbols and abbreviations are the same as those in table 1.

**Table 2**

| Ex. | Plastisol formulation (parts by weight) | | | | | | | Viscosity (mPa·s) | Extraction (mg/dm²) | | |
|---|---|---|---|---|---|---|---|---|---|---|---|
| | Pevikon 15 | Reagens AP59 | PE10 | Santicizer 416 | Siccative VXW6206 | ADC | KTO46 | | T₀ | T₁₄ | T₂₈ |
| 11 | 100 | 1 | 100 | / | 3 | / | / | 8,000 | 400 | 135 | 80 |
| 12 | 100 | 1 | 100 | / | / | 1.6 | / | 8,200 | 260 | 265 | 255 |
| 13 | 100 | 1 | 100 | / | / | / | 5 | 7,700 | 230 | 230 | 230 |
| 14 | 100 | 1 | 100 | / | / | / | / | 8,100 | 370 | 360 | 380 |
| 15 | 100 | 1 | / | 100 | / | / | / | 24,000 | 75 | 80 | 80 |
| 16 | 100 | 1 | / | 150 | / | / | / | 7,800 | 275 | 285 | 280 |

### Comment to the results

The results in table 1 show that the plasticizing systems of the invention, consisting of a polyester terminated with unsaturated fatty acids and a radical generator (examples 3 and 4), give rise to a significant reduction over time of the values of extraction with solvents; in particular, the plastisol of example 3, in addition to presenting a reduction in the extraction value greater than 50% 28 days after the preparation, is also the one which at 28 days shows the best absolute extraction value with solvents, far below the value measured for the sample of example 8, obtained with a commercial plasticizer. The plastisol of example 4 too (according to the invention), although it does not have an absolute extraction value at 28 days like that of sample 3, presents a value not much higher than the plastisol of example 8. On the other hand, the comparison samples show minimum reductions over time in the extraction value (samples 5 and 6) and in some cases even increases over time in said value (samples 8 and 9); comparison sample 7, while showing a reduction over time in the extraction value, does not reach an absolute value at 28 days as low as those of the samples of the invention.

Analogously, the results in table 2 show that the plasticizing system of the invention, consisting of a polyester terminated with unsaturated fatty acids and a siccative (example 11), gives rise to a significant reduction over time in the extraction values with solvents; in particular, already after 14 days the extraction value is half that of the sample of example 16, obtained with a commercial plasticizer and having approximately the same initial viscosity as the plastisol. Furthermore the extraction value at 28 days reaches the value of example 15, obtained with the same quantity of a commercial plasticizer which, however, produces a plastisol with an initial viscosity 3 times greater and is therefore difficult to process. Also the extraction values of examples 12 and 13 confirm that cross-linking of the plasticizer has taken place (by comparison with the values of example 14): while being higher over time than those of example 11, they have the advantage of the cross-linking being immediate.

## Claims

1. Thermoplastic polymer-based plasticized composition comprising:
- one or more vinylic or acrylic thermoplastic polymers, P;
- a polyester, A, obtained by reacting:
- a reagent A1 consisting of one or more components chosen from dicarboxylic acids, corresponding anhydrides, hydroxyacids and corresponding lactones;
- a reagent A2 consisting of one or more polyvalent alcohols, or a mixture of one or more polyvalent alcohols and one or more monovalent alcohols; and
- a reagent A3 consisting of one or more unsaturated fatty acids or a mixture of one or more unsaturated fatty acids and one or more other monocarboxylic acids;
in which the reagents A1, A2 and A3 are reacted in stoichiometric ratios such that the total moles of the unsaturated fatty acids are no less than the difference between the total moles of the reagent A2 and the total moles of the dicarboxylic acids and corresponding anhydrides of the reagent A1;
- a radical generator, B.

2. Plasticized composition according to claim 1, wherein the quantity by weight of the polyester A is comprised between 5 and 200 parts per 100 parts of polymer P.

3. Plasticized composition according to claim 2, wherein the quantity by weight of the radical generator B is between 0.01 and 5 parts per 100 parts of polyester A.

4. Plasticized composition according to any one of claims from 1 to 3, wherein said polyvalent alcohols are chosen from ethylene glycol, diethylene glycol, triethylene glycol, polyethylene glycol, 1,2-propanediol, dipropylene glycol, polypropylene glycol, 1,3-propanediol, 2-methyl-2-ethyl-1,3-propanediol, 2-methyl-1,3-propanediol, 1,2-butanediol, 1,3-butanediol, 1,4-butanediol, neopentyl glycol, 1,4-pentanediol, 1,6-hexanediol, glycerin, trimethylolpropane or pentaerythrite.

5. Plasticized composition according to any one of claims from 1 to 4, wherein said thermoplastic polymer is polyvinyl chloride.

6. Plasticized composition according to any one of claims from 1 to 5, wherein said radical generator B is chosen from diazo compounds, organic peroxides, photoinitiators and metal salts of organic acids.

7. Plasticized composition according to claim 6, wherein said diazo compounds are chosen from azodicarbonamide, azobisisobutyronitrile and 1,1-azobiscyclohexanecarbonitrile.

8. Plasticized composition according to claim 6, wherein said organic peroxides are chosen from methyl ethyl ketone peroxide, methyl isobutyl ketone peroxide, acetylacetone peroxide, cyclohexanone peroxide, cumene hydroperoxide, tert-butyl hydroperoxide and dibenzoyl peroxide.

9. Plasticized composition according to claim 6, wherein said photoinitiators are chosen from benzoin and its ethers; benzyl and its ketals; acetophenone and its derivatives, benzophenone and its derivatives, alkylphenones and their derivatives; alpha hydroxyketones; acylphosphine oxides; thioxanthones and titanocenes.

10. Plasticized composition according to claim 6, wherein said metal salts of organic acids are chosen from the salts of carboxylic acids of cobalt, manganese, cerium, iron and vanadium.

11. Method for the production of articles consisting in causing the gelation of a plasticized composition according to any one of claims from 1 to 10.

12. Method according to claim 11, wherein a pre-mixture between the thermoplastic polymer P and the polyester A and possible additives is produced, and wherein the radical generator B is one or more metal salts of organic acids which is added to said pre-mixture shortly before gelation of the plasticized composition.

13. Method according to one of claims 11 or 12, wherein said articles are included in the following families:
- seals of capsules for food product containers;
- film for food packaging;
- pipes for oil, petrol, solvents;
- sheaths for electrical cables;
- industrial gloves;
- insulating tape.

14. Article produced according to the method of any one of claims from 11 to 13, wherein said plasticized composition is in the form of plastisol.

## Patentansprüche

1. Thermoplastische, polymerbasierte, plastifizierte Zusammensetzung, umfassend:
- ein oder mehrere thermoplastische Vinyl- oder Acrylpolymere, P;
- einen Polyester, A, erhalten durch eine Reaktion von:
- einem Reagenz A1, bestehend aus einer oder mehreren Komponenten, ausgewählt aus Dicarbonsäuren, den korrespondierenden Anhydriden, Hydroxysäuren und den korrespondierenden Lactonen;
- einem Reagenz A2, bestehend aus einem oder mehreren mehrwertigen Alkoholen oder einer Mischung aus einem oder mehreren mehrwertigen Alkoholen und einem oder mehreren einwertigen Alkoholen; und
- einem Reagenz A3, bestehend aus einer oder mehreren ungesättigten Fettsäuren oder einer Mischung aus einer oder mehreren ungesättigten Fettsäuren und einer oder mehreren anderen Monocarbonsäuren;
wobei die Reagenzien A1, A2 und A3 in stöchiometrischen Verhältnissen auf solche Weise zur Reaktion gebracht werden, dass die Gesamtzahl an Mol der ungesättigten Fettsäuren nicht kleiner ist als die Differenz von Gesamtzahl an Mol Reagenz A2 und Gesamtzahl an Mol der Dicarbonsäuren und korrespondierenden Anhydride von Reagenz A1;
- einen Radikalerzeuger B.

2. Plastifizierte Zusammensetzung gemäß Anspruch 1, wobei die Menge nach Gewicht von Polyester A im Bereich zwischen 5 und 200 Teilen pro 100 Teile Polymer P liegt.

3. Plastifizierte Zusammensetzung gemäß Anspruch 2, wobei die Menge nach Gewicht des Radikalerzeugers B im Bereich zwischen 0.01 und 5 Teilen pro 100 Teile Polyester A liegt.

4. Plastifizierte Zusammensetzung gemäß einem der Ansprüche 1 bis 3, wobei genannte mehrwertige Alkohole aus Ethylenglykol, Diethylenglykol, Triethylenglykol, Polyethylenglykol, 1,2-Propandiol, Dipropylenglykol, Polypropylenglykol, 1,3-Propandiol, 2-Methyl-2-ethyl-1,3-propandiol, 2-Methyl-1,3-propandiol, 1,2-Butandiol, 1,3-Butandiol, 1,4-Butandiol, Neopentylglykol, 1,4-Pentandiol, 1,6-Hexandiol, Glycerin, Trimethylolpropan oder Pentaerythrit ausgewählt werden.

5. Plastifizierte Zusammensetzung gemäß einem der Ansprüche 1 bis 4, wobei genanntes thermoplastisches Polymer Polyvinylchlorid ist.

6. Plastifizierte Zusammensetzung gemäß einem der Ansprüche 1 bis 5, wobei genannter Radikalerzeuger B aus Diazoverbindungen, organischen Peroxiden, Photoinitiatoren und Metallsalzen von organischen Säuren ausgewählt wird.

7. Plastifizierte Zusammensetzung gemäß Anspruch 6, wobei genannte Diazoverbindungen aus Azodicarbonamid, Azobisisobutyronitril und 1,1-Azobiscyclohexancarbonitril ausgewählt werden.

8. Plastifizierte Zusammensetzung gemäß Anspruch 6, wobei genannte organische Peroxide aus Methylethylketonperoxid, Methylisobutylketonperoxid, Acetylacetonperoxid, Cyclohexanonperoxid, Cumolhydroperoxid, tert-Butylhydroperoxid und Dibenzoylperoxid ausgewählt werden.

9. Plastifizierte Zusammensetzung gemäß Anspruch 6, wobei genannte Photoinitiatoren aus Benzoin und seinen Ethern, Benzyl und seinen Ketalen, Acetophenon und seinen Derivaten, Benzophenon und seinen Derivaten, Alkylphenonen und ihren Derivaten, alpha-Hydroxyketonen; Acylphosphinoxiden; Thioxanthonen und Titanocenen ausgewählt werden.

10. Plastifizierte Zusammensetzung gemäß Anspruch 6, wobei genannte Metallsalze von organischen Säuren aus den Salzen von Carbonsäuren von Cobalt, Mangan, Cer, Eisen und Vanadium ausgewählt werden.

11. Verfahren zur Herstellung von Gegenständen, bestehend aus dem Verursachen einer Gelierung einer plastifizierten Zusammensetzung gemäß einem der Ansprüche von 1 bis 10.

12. Verfahren gemäß Anspruch 11, wobei aus dem thermoplastischen Polymer P und dem Polyester A und möglichen Additiven eine Vormischung hergestellt wird, und wobei der Radikalerzeuger B eines oder mehrere Metallsalze von organischen Säuren ist, die kurz vor der Gelierung der plastifizierten Zusammensetzung zu der genannten Vormischung gegeben werden.

13. Verfahren gemäß einem der Ansprüche 11 oder 12, wobei genannte Gegenstände die folgenden Familien umfassen:
- Siegel für Verschlüsse für Nahrungsmittelproduktbehälter;
- Folien für Nahrungsmittelverpackungen;
- Leitungen für Öl, Treibstoff, Lösungsmittel;
- Ummantellungen für elektrische Kabel;
- Industriehandschuhe;
- Isolierband.

14. Gegenstand, erzeugt gemäß dem Verfahren gemäß einem der Ansprüche von 11 bis 13, wobei genannte plastifizierte Zusammensetzung in der Form eines Plastisols vorliegt.

## Revendications

1. Composition thermoplastique plastifiée à base de polymère comprenant:
- un ou plusieurs polymères thermoplastiques vinyliques ou acryliques, P;
- un polyester, A, obtenu en faisant réagir:
- un réactif A1 constitué d'un ou de plusieurs composants sélectionnés parmi des acides dicarboxyliques, d'anhydrides correspondants, de hydroxyacides et de lactones correspondants;
- un réactif A2 constitué d'un ou de plusieurs alcools polyvalents ou d'un mélange d'un ou de plusieurs alcools polyvalents et d'un ou de plusieurs alcools monovalents; et
- un réactif A3 consistant en un ou plusieurs acides gras insaturés ou en un mélange d'un ou de plusieurs acides gras insaturés et d'un ou de plusieurs autres acides monocarboxyliques;
- dans laquelle les réactifs A1, A2 et A3 sont amenés à réagir selon des rapports stoechiométriques de sorte que les moles au total des acides gras insaturés ne sont pas inférieurs à la différence entre les moles au total du réactif A2 et les moles au total des acides dicarboxyliques et des anhydrides correspondants du réactif A1;
- un générateur de radicaux, B.

2. Composition plastifiée selon la revendication 1, dans laquelle la quantité en poids du polyester A est comprise entre 5 et 200 parties pour 100 parties de polymère P.

3. Composition plastifiée selon la revendication 2, dans laquelle la quantité en poids du générateur de radicaux B est entre 0,01 et 5 parties pour 100 parties de polyester A.

4. Composition plastifiée selon l'une quelconque des revendications 1 à 3, dans laquelle lesdits alcools polyvalents sont sélectionnés parmi l'éthylène glycol, diéthylène glycol, triéthylène glycol, polyéthylène glycol, 1,2-propanediol, dipropylène glycol, polypropylène glycol, 1,3-propanediol, 2-méthyl-2-éthyl-1,3-propanediol, 2-méthyl-1,3-propanediol, 1,2-butanediol, 1,3-butanediol, 1,4-butanediol, néopentyl glycol, 1,4-pentanediol, 1,6-hexanediol, glycérine, triméthylolpropane ou pentaérythrite.

5. Composition plastifiée selon l'une quelconque des revendications 1 à 4, dans laquelle ledit polymère thermoplastique est le polyvinyl chlorure.

6. Composition plastifiée selon l'une quelconque des revendications 1 à 5, dans laquelle ledit générateur de radicaux B est sélectionné parmi des composés diazo, des péroxydes organiques, des photoinitiateurs et des sels de métaux d'acides organiques.

7. Composition plastifiée selon la revendication 6, dans laquelle lesdits composés diazo sont sélectionnés parmi azodicarbonamide, azobisisobutyronitrile et 1,1-azobiscyclohexanecarbonitrile.

8. Composition plastifiée selon la revendication 6, dans laquelle lesdits peroxydes organiques sont sélectionnés parmi méthyl éthyl cétone peroxyde, méthyl isobutyl cétone peroxyde, acétylacétone peroxyde, cyclohexanone peroxyde, cumène hydroperoxyde, tert-butyl hydroperoxyde et dibenzoyl peroxyde.

9. Composition plastifiée selon la revendication 6, dans laquelle lesdits photoinitiateurs sont sélectionnés parmi la benzoïne et ses éthers; benzyle et ses cétals; acétophénone et ses dérivés, benzophénone et ses dérivés, alkylphénones et leurs dérivés; alpha hydroxycétones; acylphosphine oxydes; thioxanthones et titanocènes.

10. Composition plastifiée selon la revendication 6, dans laquelle lesdits sels métalliques d'acides organiques sont sélectionnés parmi les sels des acides carboxyliques de cobalt, manganèse, cérium, fer et vanadium.

11. Procédé de production d'articles consistant en provoquant la gélification d'une composition plastifiée selon l'une quelconque des revendications 1 à 10.

12. Procédé selon la revendication 11, dans lequel un pré-mélange entre le polymère thermoplastique P et le polyester A et des additifs possibles est produit, et où le générateur de radicaux B est un ou plusieurs sels métalliques d'acides organiques qui est ajouté audit pré-mélange peu avant la gélification de la composition plastifiée.

13. Procédé selon l'une des revendications 11 ou 12, dans lequel lesdits articles sont inclus dans les familles suivantes:
- scellements de capsules pour des récipients de produit alimentaire;
- film pour l'emballage d'aliments;
- canalisations d'huile, de pétrole, de solvants;
- gaines pour des câbles électriques;
- gants industriels;
- bande isolante.

14. Article produit selon le procédé selon l'une quelconque des revendications 11 à 13, où ladite composition plastifiée se présente sous la forme de plastisols.
